# EUROPÄISCHE PATENTANMELDUNG

(11) **EP 3 617 554 A1**
(43) Veröffentlichungstag der Anmeldung: **04.03.2020**
(21) Anmeldenummer: 19184592.4
(22) Anmeldetag: 05.07.2019
(51) Int. Cl.: F16H 55/52, F16H 9/16

(54) **BAUKASTENSYSTEM UND VERFAHREN ZUR HERSTELLUNG ZUMINDEST EINES GETRIEBES NACH EINEM BAUKASTENSYSTEM**

(30) Priorität: 03.09.2018 DE 102018121421
(71) Anmelder: CLAAS Selbstfahrende Erntemaschinen GmbH, 33428 Harsewinkel (DE)
(72) Erfinder: Koch, Markus, 48369 Saerbeck (DE)
(74) Vertreter: CLAAS Gruppe

(57) **Zusammenfassung**

Die vorliegende Erfindung betrifft ein Baukastensystem, umfassend zumindest ein stufenloses Getriebe (31, 31') zum Antreiben zumindest eines Arbeitsorgans (22) einer Erntemaschine (1), wobei das zumindest eine stufenlose Getriebe (31, 31') folgende Grundkomponenten umfasst:
ein auf einer Antriebsseite angeordnetes Antriebsscheibenpaket (32) und ein auf einer Abtriebsseite angeordnetes Abtriebsscheibenpaket (33), die jeweils zwei konische Regelscheiben (36a, 36b; 37a, 37b) aufweisen,
- drehmomentübertragende Bauteile, auf denen das Antriebsscheibenpaket (32) und das Abtriebsscheibenpaket (32) angeordnet sind,
- wobei von dem Antriebsscheibenpaket (32) und dem Abtriebsscheibenpaket (33) jeweils zumindest eine Regelscheibe (36b, 37b) axial verschiebbar auf einer jeweiligen Antriebswelle (40, 47) der Antriebsseite und der Abtriebsseite angeordnet ist,

wobei die Regelscheiben (36a, 36b; 37a, 37b) eine einheitliche geometrische Form aufweisen und auf den drehmomentübertragenden Bauteilen lösbar befestigt sind, wobei das Baukastensystem durch eine Variation der Regelscheiben (36a, 36b) der Antriebsseite und/oder der Regelscheiben (37a, 37b) der Abtriebsseite verschiedene Drehzahlbereiche bereitstellen.

## Beschreibung

Die vorliegende Erfindung betrifft ein Baukastensystem gemäß dem Oberbegriff des Anspruches 1. Weiterhin betrifft die vorliegende Erfindung eine Erntemaschine gemäß dem Oberbegriff des Anspruches 14 sowie ein Verfahren zur Herstellung zumindest eines Getriebes nach einem Baukastensystem gemäß dem Oberbegriff des Anspruches 15.

Zum Antreiben von Arbeitsorganen landwirtschaftlicher Erntemaschinen werden vielfach stufenlose Getriebe, die als Umschlingungsgetriebe ausgeführt sind, eingesetzt. Das stufenlose Getriebe wird auch als Variatorgetriebe bezeichnet.

Ein solches stufenloses Getriebe umfasst dabei folgende Grundkomponenten:
ein Antriebsscheibenpaket und ein Abtriebsscheibenpaket, die jeweils zwei konische Regelscheiben aufweisen, drehmomentübertragende Bauteile, auf denen die Regelscheiben von Antriebsscheibenpaket und Abtriebsscheibenpaket angeordnet sind, wobei die drehmomentübertragenden Bauteile jeweils eine Antriebswelle, eine Nabe und einen hohlzylindrischen Übertragungsabschnitt umfassen, wobei von dem Antriebsscheibenpaket und dem Abtriebsscheibenpaket jeweils zumindest eine Regelscheibe axial verschiebbar auf der jeweiligen Antriebswelle angeordnet ist.

Ein stufenloses Getriebe der vorstehend beschriebenen Art ist aus der DE 198 02 605 A1 bekannt. Ein Antriebsscheibenpaket weist eine stationäre konische Regelscheibe und eine bewegbare Regelscheibe auf, welche durch einen Riemen mit einem Abtriebsscheibenpaket, welches ebenfalls eine stationäre konische Regelscheibe und eine bewegbare Regelscheibe aufweist, trieblich verbunden ist. Die stationäre Regelscheibe des Antriebsscheibenpaketes ist auf einer Antriebswelle und die stationäre Regelscheibe des Abtriebsscheibenpaketes ist auf einer getriebenen Welle angeordnet, wobei die Antriebswelle bzw. die getriebene Welle und die jeweilige darauf angeordnete stationäre Regelscheibe einstückig ausgeführt sind. Die jeweilige bewegbare Regelscheibe des Antriebsscheibenpaketes und des Abtriebsscheibenpaketes ist einstückig mit einem hohlzylindrischen Abschnitt ausgeführt, mit welchem die jeweilige bewegbare Regelscheibe auf der Antriebswelle bzw. der getriebenen Welle angeordnet ist, um mittels einer Kugelfedernut einer Kugelfederkupplung nur in einer Axialrichtung bewegbar zu sein.

Die Verwendung solcher stufenlosen Getriebe erfolgt zum Antreiben verschiedener Arbeitsorgane einer Erntemaschine, wobei sowohl zum Antreiben der jeweiligen Arbeitsorgane als auch an Erntemaschinen unterschiedlicher Leistungsklassen bzw. Baureihen an diese drehzahlmäßig angepasste stufenlose Getriebe zur Anwendung kommen. Die hierdurch bedingte notwendige Komplexität der stufenlosen Getriebe, insbesondere die einstückige Ausführung der Antriebswelle und stationären Regelscheibe bzw. der einstückigen Ausführung von hohlzylindrischem Abschnitt und der mit diesem verschiebbaren Regelscheibe, wie sie aus dem genannten Stand der Technik bekannt sind, führen dazu, dass für unterschiedliche Baureihen von Erntemaschinen sowie innerhalb der Baureihen individuell konfigurierte stufenlose Getriebe vorzusehen sind, was kostenintensiv ist. Zudem erfordert die einstückige Ausführung besondere fertigungstechnische Möglichkeiten. Somit geht ein hoher fertigungstechnischer und logistischer Aufwand bei der Herstellung von Erntemaschinen unterschiedlicher Leistungsklassen bzw. Baureihen einher, wen diese mit stufenlosen Getrieben gemäß der DE 198 02 605 A1 ausgestattet werden.

Daher ist es die Aufgabe der vorliegenden Erfindung, ein Baukastensystem sowie ein Verfahren zur Herstellung zumindest eines Getriebemoduls nach einem Baukastensystem der eingangs genannten Art bereitzustellen, durch welche die Bereitstellung von als Getriebemodulen ausgeführten stufenlosen Getrieben für Erntemaschinen unterschiedlicher Leistungsklassen bzw. Baureihen bzw. zumindest einer Erntemaschine mit unterschiedlichen Arbeitsorganen vereinfacht und kosteneffizienter darstellbar wird.

Diese Aufgabe wird erfindungsgemäß für ein Baukastensystem durch die Merkmale des Anspruches 1 gelöst. Weiterhin wird die Aufgabe durch eine Erntemaschine gemäß dem Anspruch 14 sowie ein Verfahren zur Herstellung zumindest eines Getriebes nach einem Baukastensystem gemäß dem Anspruch 15 gelöst.

Vorteilhafte Weiterbildungen sind Gegenstand der Unteransprüche.

Gemäß dem Anspruch 1 wird ein Baukastensystem vorgeschlagen, umfassend zumindest ein stufenloses Getriebe zum Antreiben zumindest eines Arbeitsorgans einer Erntemaschine, wobei das zumindest eine stufenlose Getriebe folgende Grundkomponenten umfasst:
ein auf einer Antriebsseite angeordnetes Antriebsscheibenpaket und ein auf einer Abtriebsseite angeordnetes Abtriebsscheibenpaket, die jeweils zwei konische Regelscheiben aufweisen,
- drehmomentübertragende Bauteile, auf denen das Antriebsscheibenpaket und das Abtriebsscheibenpaket angeordnet sind,
- wobei von dem Antriebsscheibenpaket und dem Abtriebsscheibenpaket jeweils zumindest eine Regelscheibe axial verschiebbar auf einer jeweiligen Antriebswelle der Antriebsseite und der Abtriebsseite angeordnet ist.

Zur vereinfachten und kosteneffizienten Bereitstellung von stufenlosen Getrieben für Erntemaschinen unterschiedlicher Leistungsklassen bzw. Baureihen bzw. deren unterschiedliche Arbeitsorgane ist vorgesehen, dass die Regelscheiben eine einheitliche geometrische Form aufweisen und auf den drehmomentübertragenden Bauteilen lösbar befestigt sind, wobei das Baukastensystem durch eine Variation der Regelscheiben der Antriebsseite und/oder der Regelscheiben der Abtriebsseite verschiedene Drehzahlbereiche abdeckt. Die einheitliche geometrische Form in Verbindung mit der lösbaren Befestigung an den drehmomentübertragenden Bauteilen ermöglicht eine einfache und flexible Variation der stufenlosen Getriebe, um diese an unterschiedliche Baureihen von Erntemaschinen gleichen Typs als auch innerhalb einer Erntemaschine für unterschiedliche Arbeitsorgane, die mit unterschiedlichen Drehzahlbereichen betrieben werden, zum Einsatz zu bringen. Insbesondere sind die Regelscheiben des Antriebsscheibenpaketes und des Abtriebsscheibenpaketes rotationssymmetrisch ausgebildet. Dabei weisen die Regelscheiben des Antriebsscheibenpaketes und des Abtriebsscheibenpaketes einen im Wesentlichen kegelstumpfförmigen Querschnitt auf.

Dabei können die Regelscheiben des Antriebsscheibenpaketes und des Abtriebsscheibenpaketes des zumindest einen als ein Getriebemodul ausgebildeten stufenlosen Getriebes jeweils gleiche Außendurchmesser aufweisen. Innerhalb eines solchen Getriebemoduls kann dadurch die Zahl der Gleichteile erhöht werden. Insbesondere die Herstellung der Regelscheiben kann auf diese Weise vereinfacht und mit hohen Stückzahlen erfolgen. Unter dem Begriff Getriebemodul im Sinne der vorliegenden Erfindung wird ein stufenloses Getriebe verstanden, welches Komponenten zur Führung und Kraftübertragung aufweist, die untereinander auswechselbar sind.

Alternativ können die Regelscheiben des Antriebsscheibenpaketes und des Abtriebsscheibenpaketes des zumindest einen als ein Getriebemodul ausgebildeten stufenlosen Getriebes unterschiedliche Außendurchmesser aufweisen. Dadurch kann eine erhöhte Anzahl an Drehzahlbereiche bereitgestellt werden, wobei die Regelscheiben des jeweiligen Antriebsscheibenpaketes und des jeweiligen Abtriebsscheibenpaketes baugleich sind. Baugleich im Sinne der Erfindung heißt, dass zumindest die geometrische Form der Regelscheiben identisch ist. Dabei können die jeweiligen Regelscheiben des Antriebsscheibenpaketes und des Abtriebsscheibenpaketes zumindest innerhalb des Getriebemoduls untereinander austauschbar sein.

Weiterhin können durch die Regelscheiben zumindest zwei stufenlose Getriebe unterschiedlicher Drehzahlbereiche darstellbar sein. Hierzu weisen alle Regelscheiben des einen stufenlosen Getriebes mit einem ersten Drehzahlbereich einen ersten Außendurchmesser auf, während die Regelscheiben des weiteren stufenlosen Getriebes mit einem zweiten Drehzahlbereich einen zweiten Außendurchmesser aufweisen, der von dem ersten Außendurchmesser abweicht.

Insbesondere können die Regelscheiben für eine Anzahl n unterschiedlicher Baureihen der landwirtschaftlichen Erntemaschine einsetzbar sein. Dabei entspricht die Anzahl n an Baureihen einem Wert gleich oder größer. Die vereinheitliche Geometrie der Regelscheiben ermöglicht ein breites Anwendungsspektrum über die unterschiedlichen Baureihen der landwirtschaftlichen Erntemaschine eines spezifischen Typs hinweg.

Vorteilhaft ist es, dass die Regelscheiben als Gussteile ausgeführt sind. Die vereinheitliche und vereinfachte Geometrie der Regelscheiben, durch die eine Austauschbarkeit zwischen den Getriebemodulen erreicht wird, ermöglicht das mit einem fertigungstechnisch geringeren Aufwand verbundene Herstellverfahren der Regelscheiben.

Hierbei können die Regelscheiben mittels Schraubverbindungen mit den drehmomentübertragenden Bauteilen lösbar verbunden sein. Ein Austausch der Regelscheiben wird hierdurch vereinfacht.

Bevorzugt können die Regelscheiben jeweils einen Ringbund aufweisen, durch den die jeweilige Regelscheibe mit einem korrespondierenden Flanschabschnitt der drehmomentübertragenden Bauteile verbindbar ist. Dabei können die Ringbünde einheitlich ausgeführt sein, d.h. die Ringbünde können identische Abmessungen auf weisen.

Hierbei können die drehmomentübertragenden Bauteile eine Nabe und ein hohlzylindrischer Übertragungsabschnitt sein. Der hohlzylindrische Übertragungsabschnitt ist bevorzugt koaxial zu einer Antriebswelle angeordnet. Die Antriebswelle ist bevorzugt als Hohlwelle ausgebildet. An der Antriebswelle ist der hohlzylindrische Übertragungsabschnitt drehfest angeordnet. Auf der Antriebswelle ist die Nabe in axialer Richtung verschieblich angeordnet.

Vorzugsweise kann der hohlzylindrische Übertragungsabschnitt auf der Antriebsseite und der Abtriebsseite baugleich ausgeführt sein. Dadurch lässt sich ein zusätzlicher Stückzahleneffekt bei der Herstellung bewirken, der sich positiv auf die Kosten auswirkt.

Insbesondere können durch eine Variation der Regelscheiben und der hohlzylindrische Übertragungsabschnitte zumindest zwei Getriebemodule ausbildbar sein, die verschiedene stufenlose Getriebe für eine Anzahl n unterschiedlicher Baureihen landwirtschaftlicher Erntemaschinen abbilden.

Bevorzugt können die Regelscheiben des Antriebsscheibenpaketes und des Abtriebsscheibenpaketes sowie die hohlzylindrischen Übertragungsabschnitte zwischen den Getriebemodulen austauschbar sein.

Vorzugsweise kann zur axialen Verschiebung der zumindest einen Regelscheiben des jeweiligen Antriebsscheibenpaketes und Abtriebsscheibenpaketes eine hydraulisch betätigbare Verstellvorrichtung vorgesehen sein. Weiter bevorzugt kann eine jeweilige hydraulische Verstelleinrichtung, die dem axialen Verschieben einer Regelscheibe des jeweiligen Getriebemoduls dient, baugleich ausgeführt sein.

Gemäß dem Anspruch 14 wird eine Erntemaschine mit zumindest einem Arbeitsorgan, das durch zumindest ein stufenloses Getriebe antreibbar ist, vorgeschlagen, wobei das zumindest eine stufenlose Getriebe mittels eines Baukastensystems nach einem der Ansprüche 1 bis 13 ausgebildet ist.

Insbesondere kann die zumindest eine Erntemaschine als ein Mähdrescher ausgeführt sein. Mähdrescher weisen eine Vielzahl von Arbeitsorganen auf, die bevorzugt mittels Riementrieben angetrieben werden. Um zumindest einige der Arbeitsorgane drehzahlvariabel antreiben zu können, können die zumindest zwei Getriebemodule zum Einsatz kommen. Aufgrund der Kombinierbarkeit der zumindest zwei Grundkomponenten, der Regelscheiben und der hohlzylindrischen Abschnitte untereinander, sind die zumindest zwei Getriebemodule flexibel an für die unterschiedlichen Arbeitsorgane spezifischen Drehzahlbereiche, innerhalb derer diese betrieben werden, anpassbar.

Hierbei kann wenigstens eines der zumindest zwei Getriebemodule dem Antrieb von als Vorsatzgerät, Dresch-Trenneinrichtung und/oder Abscheideeinrichtung ausgeführten Arbeitsorganen der Erntemaschine einer Baureihe dienen. Für das Antreiben dieser Arbeitsorgane können unterschiedliche Drehzahlbereiche erforderlich sein, welche durch die zumindest zwei Getriebemodule darstellbar sind. Insbesondere können die zumindest zwei Getriebemodule dem baureihenübergreifenden Antrieb zumindest einer Dreschtrommel der Dresch-Trenneinrichtung und/oder einem als Abscheiderotor ausgebildeten Förderorgan der Abscheideeinrichtung dienen.

Gemäß dem Anspruch 15 wird ein Verfahren zur Herstellung zumindest eines stufenlosen Getriebes nach einem Baukastensystem vorgeschlagen, wobei mittels des Baukastensystems zumindest ein stufenloses Getriebe zum Antreiben zumindest eines Arbeitsorgans einer Erntemaschine ausgestattet wird, wobei das zumindest eine stufenlose Getriebe folgende Grundkomponenten umfasst:
- ein Antriebsscheibenpaket, das auf einer Antriebsseite angeordnet wird, und ein Abtriebsscheibenpaket, das auf einer Abtriebsseite angeordnet wird, wobei das Antriebsscheibenpaket und das Abtriebsscheibenpaket jeweils zwei konische Regelscheiben aufweisen,
- drehmomentübertragende Bauteile, auf denen das Antriebsscheibenpaket und das Abtriebsscheibenpaket angeordnet werden,
- wobei von dem Antriebsscheibenpaket und dem Abtriebsscheibenpaket jeweils zumindest eine Regelscheibe axial verschiebbar auf einer jeweiligen Antriebswelle angeordnet wird, wobei die Regelscheiben mit einer einheitlichen geometrischen Form hergestellt und auf den drehmomentübertragenden Bauteilen lösbar befestigt werden, wobei durch eine Variation der Regelscheiben der Antriebsseite und/oder der Regelscheiben der Abtriebsseite verschiedene Drehzahlbereiche bereitgestellt werden. Das zumindest eine stufenlose Getriebe wird als ein Getriebemodul ausgeführt, dessen Modularität aus der Variierbarkeit der eine einheitliche geometrische Form aufweisenden Regelscheiben der Antriebsseite und/oder der Regelscheiben der Abtriebsseite resultiert.

Die vorliegende Erfindung wird nachstehend anhand eines in den Zeichnungen dargestellten Ausführungsbeispieles näher erläutert.

Es zeigen:
- Fig. 1: eine schematische Ansicht einer Erntemaschine;
- Fig. 2: als Getriebemodule ausgebildete stufenlose Getriebe für eine Erntemaschine;
- Fig. 3: eine Schnittansicht eines Antriebsscheibenpakete eines ersten Getriebemoduls gemäß Fig. 2;
- Fig. 4: eine Schnittansicht eines Abtriebsscheibenpaketes eines zweiten Getriebemoduls gemäß Fig. 2.

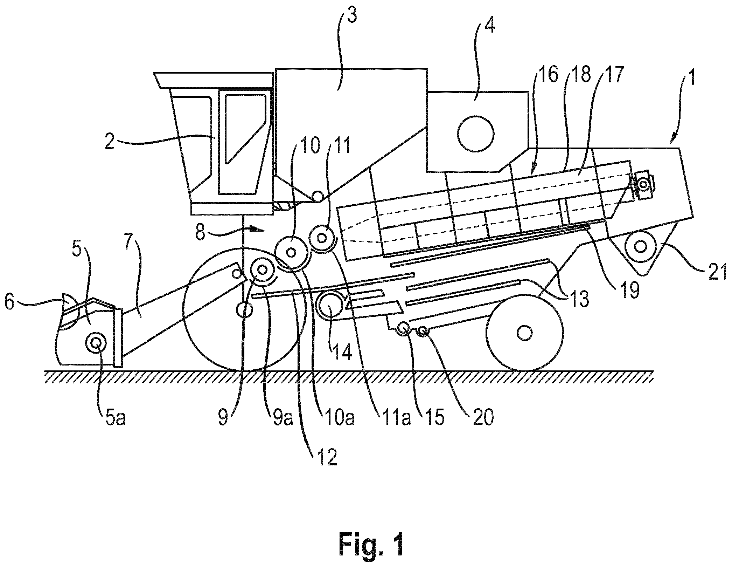

In der Fig. 1 ist mit 1 eine als selbstfahrender Mähdrescher ausgeführte Erntemaschine bezeichnet, die eine Fahrerkabine 2, einen hinter dieser liegenden Korntank 3 sowie anschließend an diesen eine Brennkraftmaschine 4 aufweist. Weiterhin nimmt die selbstfahrende Erntemaschine 1 in ihrem Frontbereich einen Erntevorsatz 5 auf, der nur teilweise dargestellt und beispielsweise als Getreide- beziehungsweise Rapsschneidwerk ausgebildet ist. Als Erntevorsatz 5 kann auch ein Maisvorsatz verwendet werden, der die Maisstängel erfasst und der mittels einer Pflückeinrichtung die Maiskolben von den Maisstängeln trennt.

Der Erntevorsatz 5 erfasst das zu erntende Halmgut mit einer Haspel 6 und schneidet es mittels eines nicht näher dargestellten Mähwerks bodennah ab, woraufhin das geschnittene Erntegut durch eine Querförderschnecke 5a in einen Mittenbereich des Erntevorsatzes 5 gefördert wird. Aus dem Mittenbereich des Erntevorsatzes 5 gelangt das Erntegut in einen Schrägförderer 7, der das Erntegut einer Dresch- und Trenneinrichtung 8 zugeführt. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Abscheidetrommel 11. Diesen Trommeln 9, 10 und 11 sind jeweils Abscheidekörbe 9a, 10a und 11 a zugeordnet. Die geernteten Körner oder Früchte gelangen durch die Abscheidekörbe 9a, 10a und 11 a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus der Erntemaschine 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert.

Sämtliche Anteile des Halmgutes, die die Abscheidekörbe 9a, 10a und 11a nicht in Richtung des Vorbereitungsbodens 12 passieren und bei denen es sich um Stroh, Kurzstroh, Ähren und gegebenenfalls Grannen handelt, werden mittels der Abscheidetrommel 11 oder, alternativ dazu, mittels einer Strohwendetrommel, einer Abscheideeinrichtung 16 zur Restkornabscheidung zugeführt. Diese Abscheideeinrichtung 16 zur Restkornabscheidung weist bei der in der Figur 1 dargestellten Erntemaschine 1 zumindest ein in Längsrichtung der Erntemaschine 1 verlaufendes trommelartiges Förderorgan 17 auf, das auch als Trennrotor bezeichnet wird. Je nach Leistungsklasse bzw. Baureihe der Erntemaschine 1 kann das Förderorgan 17 auch zwei Trennrotoren umfassen. Alternativ kann die Abscheideeinrichtung 16 einer anderen Leistungsklasse bzw. Baureihe der Erntemaschine 1 auch als Hordenschüttler ausgeführt sein.

Das trommelartige Förderorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die, wie z. B. nicht ausgedroschene Ähren, von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes zurück in die Dresch- und Trenneinrichtung 8. Das durch das Abscheidegehäuse 18 geförderte Stroh verlässt dieses an dessen hinterem Ende, wo das Stroh in einen Strohhäcksler 21 gelangt.

Der Erntevorsatz 5, die Dresch- und Trenneinrichtung 8 oder das Förderorgan 17 werden nachfolgend vereinfachend als Arbeitsorgane 22 beschrieben. Das Antreiben dieser Arbeitsorgane 22 erfolgt mittels zumindest eines Hauptriementriebes der Erntemaschine 1. Dabei ist für einen drehzahlvarianten Antrieb der einzelnen Arbeitsorgane 22, d.h. einen Antrieb zumindest zweier Arbeitsorgane 22 innerhalb unterschiedlicher Drehzahlbereiche, vorgesehen, diese jeweils durch ein stufenloses Getriebe, das als Umschlingungsgetriebe ausgeführt ist, mit dem zumindest einen Hauptriementrieb trieblich zu koppeln. Stufenlose Getriebe kommen auch innerhalb eines Arbeitsorgans 22 zur Anwendung, wenn diese mehrere angetriebene Komponenten umfassen, die mit unterschiedlichen, aber in einem definierten Verhältnis zueinander stehenden Drehzahlen betrieben werden. Dies ist beispielsweise bei der Dresch- und Trenneinrichtung 8 der Fall, deren Vorbeschleunigungstrommel 9 und Dreschtrommel 10 in einem festen Drehzahlverhältnis zueinander betrieben werden. Die Drehzahl der Dreschtrommel 10 lässt sich dabei variieren, um den Ausdrusch von Erntegut je nach Erntegutart und -eigenschaft mit unterschiedlicher Intensität zu ermöglichen.

Erntemaschinen 1 unterschiedlicher Leistungsklassen bzw. Baureihen unterscheiden sich unter anderem in der jeweils zur Verfügung stehenden Antriebsleistung der Brennkraftmaschine 4, im maximal erreichbaren Erntegutdurchsatz der Erntemaschinen 1, aber auch durch die Bauform und Ausgestaltung der Arbeitsorgane 22. Entsprechend hoch ist der Grad der Komplexität der für die Arbeitsorgane 22 vorgesehenen stufenlosen Getriebe.

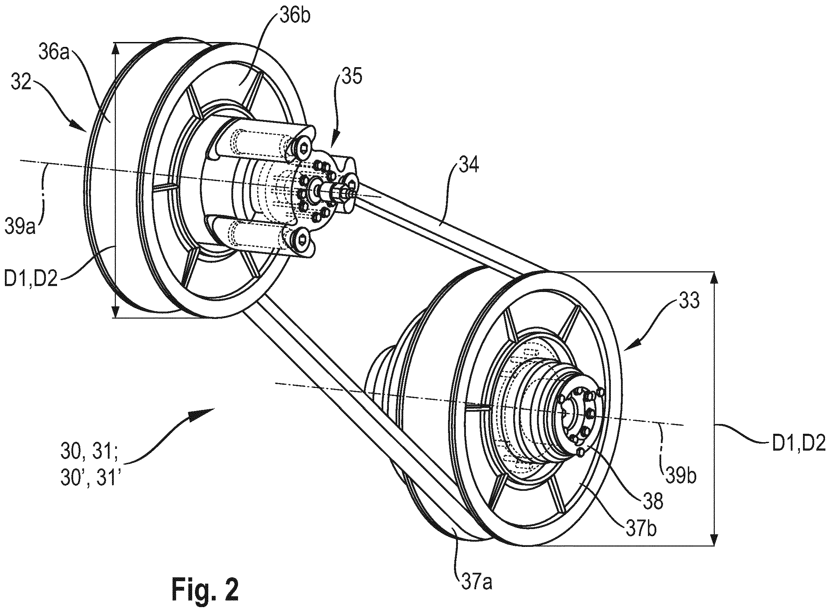

In Fig. 2 ist ein erstes Getriebemodul 30 als ausgebildetes stufenloses Getriebe 31 sowie ein zweites Getriebemodul 30'als ausgebildetes stufenloses Getriebe 31' für die Erntemaschine 1 dargestellt. Das stufenlose Getriebe 31, 31' umfasst ein Antriebsscheibenpaket 32 und ein Abtriebsscheibenpaket 33, die jeweils zwei konische Regelscheiben 36a, 36b; 37a, 37b aufweisen, die jeweils um eine Rotationsachse 39a, 39b drehbar sind. Zumindest eine Regelscheibe 36b, 37b des Antriebsscheibenpaketes 32 und des Abtriebsscheibenpaketes 33 ist in axialer Richtung, d.h. entlang der jeweiligen Rotationsachse 39a, 39b, verstellbar ausgeführt. Ein Keilriemen 34 verläuft zwischen den Regelscheiben 36a, 36b des Antriebsscheibenpaketes 32 und den Regelscheiben 37a, 37b des Abtriebsscheibenpaketes 33. Dem Antriebsscheibenpaket 32 ist eine hydraulisch betätigbare Verstellvorrichtung 35 zugeordnet, durch welches zumindest die Regelscheibe 36b axial verschiebbar ist. Alle Regelscheiben 36a, 36b; 37a, 37b des ersten Getriebemoduls 30 weisen jeweils einen gleichen Außendurchmesser D1 auf. Alle Regelscheiben 36a, 36b; 37a, 37b des zweiten Getriebemoduls 30' weisen jeweils einen gleichen Außendurchmesser D2 auf.

Das zweite als stufenloses Getriebe 31' ausgeführtes Getriebemodul 30' umfasst ebenfalls das Antriebsscheibenpaket 32 und das Abtriebsscheibenpaket 33, die jeweils zwei konische Regelscheiben 36a, 36b; 37a, 37b aufweisen, die jeweils um eine Rotationsachse 39a, 39b drehbar sind. Zumindest eine Regelscheibe 36b, 37b des Antriebsscheibenpaketes 32 und des Abtriebsscheibenpaketes 33 ist in axialer Richtung, d.h. entlang der jeweiligen Rotationsachse 39a, 39b, verstellbar ausgeführt. Der Keilriemen 34 verläuft zwischen den Regelscheiben 36a, 36b des Antriebsscheibenpaketes 32 und den Regelscheiben 37a, 37b des Abtriebsscheibenpaketes 33. Dem Antriebsscheibenpaket 32 ist eine hydraulisch betätigbare Verstellvorrichtung 35 zugeordnet, durch welche zumindest die Regelscheibe 36b axial verschiebbar ist. Alle Regelscheiben 36a, 36b; 37a, 37b des zweiten Getriebemoduls 30' weisen einen gleichen Außendurchmesser D2 auf, der sich von dem Außendurchmesser D1 der Regelscheiben 36a, 36b; 37a, 37b des ersten Getriebemoduls 30 unterscheidet.

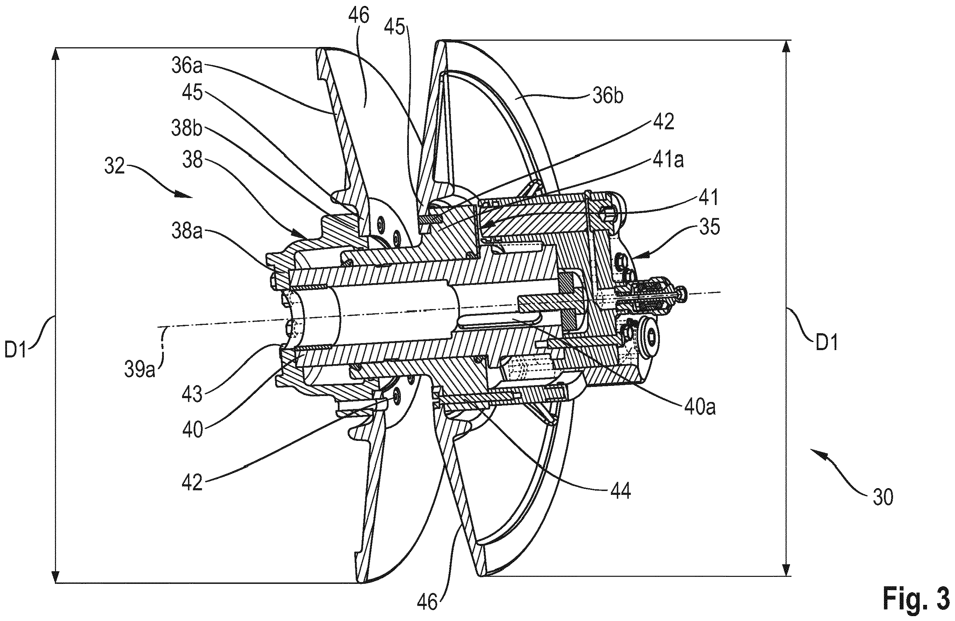

Die Darstellung in Fig. 3 zeigt eine Schnittansicht des Antriebsscheibenpaketes 32 des ersten Getriebemoduls 30 gemäß Fig. 2. Das in Fig. 3 dargestellte Antriebsscheibenpaket 32 des ersten Getriebemoduls 30 unterscheidet sich von dem Antriebsscheibenpaket 32 des zweiten Getriebemoduls 30' nur durch die Außendurchmesser D1 bzw. D2 der Regelscheiben 36a, 36b. Das erste Getriebemodul 30 umfasst drehmomentübertragende Bauteile, zu denen ein hohlzylindrischer Übertragungsabschnitt 38 sowie eine als Hohlwelle 40 ausgeführte Antriebswelle, mit welcher der Übertragungsabschnitt 38 drehfest verbunden ist, gehören. Im Inneren der Hohlwelle 40 befindet sich eine Feder 40a, die Teil einer Nut-Feder-Verbindung ist, die mit einer nicht dargestellten Vorgelegewelle in Eingriff bringbar ist. Der hohlzylindrische Übertragungsabschnitt 38 weist einen im Wesentlichen U-förmigen Querschnitt auf und ist rotationssymmetrisch ausgeführt. Auf der Hohlwelle 40 ist als weiteres drehmomentübertragendes Bauteil eine Nabe 41 angeordnet, die auf der Hohlwelle 40 entlang der Rotationsachse 39a axial verschieblich ist. Die Nabe 41 ist drehfest mit der Hohlwelle 40 verbunden. Die Nabe 41 ist mit der Verstellvorrichtung 35 verbunden, um die Nabe 41 in axialer Richtung zu verschieben.

Der Übertragungsabschnitt 38 ist koaxial zu der Hohlwelle 40 an dieser angeordnet, wobei dieser die Hohlwelle 40 abschnittsweise in axialer Richtung umschließt. Der Übertragungsabschnitt 38 ist mit einer Durchgangsbohrung versehen, deren Innendurchmesser gleich oder größer als der Innendurchmesser der Hohlwelle 40 ist. Zur Verbindung des Übertragungsabschnittes 38 mit der Hohlwelle 40 weist der Übertragungsabschnitt 38 auf einer Seite einen sich radial nach innen erstreckenden ersten Flanschabschnitt 38a auf, mit dem sich der Übertragungsabschnitt 38 an einem freien Ende der Hohlwelle 40 axial abstützt. Der Übertragungsabschnitt 38 ist mittels des ersten Flanschabschnittes 38a durch eine Schraubverbindung 43 drehfest verbunden. Weiterhin weist der Übertragungsabschnitt 38 einen sich radial nach außen erstreckenden zweiten Flanschabschnitt 38b auf, der axial beabstandet zu dem ersten Flanschabschnitt 38a ausgebildet ist.

An dem zweiten Flanschabschnitt 38b ist die Regelscheibe 36a mittels in Umfangsrichtung vorgesehener Schraubverbindungen 42 lösbar befestigt. Die Regelscheibe 36a ist durch die Verbindung mit dem zweiten Flanschabschnitt 38b ortsfest auf der Hohlwelle 40 angeordnet. Auf der Nabe 41 ist die Regelscheibe 36b des Antriebsscheibenpaketes 32 drehfest angeordnet. Die Regelscheibe 36b ist mittels der Nabe 41 in axialer Richtung auf der Hohlwelle 40 verschieblich. Die Regelscheibe 36b ist durch einen Außenflanschabschnitt 41a auf der Nabe 41 mit dieser ebenfalls durch Schraubverbindungen 42 lösbar verbunden. Weiterhin sind Schraubverbindungen 44 vorgesehen, mittels der die Regelscheibe 36b, die Nabe 41 und die Verstellvorrichtung 35 miteinander verbunden sind.

Wie aus der Darstellung in Fig. 3 ersichtlich, sind die beiden Regelscheiben 36a, 36b des Antriebsscheibenpaketes 32 des ersten Getriebemoduls 30 baugleich ausgeführt. Die Regelscheiben 36a, 36b sind dabei im Wesentlichen kegelstumpfförmig ausgebildet. Die Anordnung der Regelscheiben 36a, 36b auf der Hohlwelle 40 erfolgt spiegelbildlich, so dass sich zwischen den Regelscheiben 36a, 36b ein im Wesentlichen V-förmiger Spalt ausbildet, in dem der Keilriemen 34 umläuft. Jede Regelscheibe 36a, 36b weist einen Ringbund 45 auf, der die jeweilige Anschlussstelle zur Verbindung mit dem zweiten Flanschabschnitt 38b bzw. der Nabe 41 bildet, an denen die Regelscheibe 36a, 36b des Antriebsscheibenpaketes 32 befestigt sind. Beide Regelscheiben 36a, 36b weisen gleiche Außendurchmesser D1 auf.

An den Ringbund 45 der jeweiligen Regelscheibe 36a, 36b schließt sich ein radialer Abschnitt 46 an, der geneigt ausgeführt ist. Die einander zugewandten radialen Abschnitte 46 der Regelscheiben 36a, 36b bilden aufgrund der jeweiligen Neigung den im Wesentlichen V-förmigen Spalt aus.

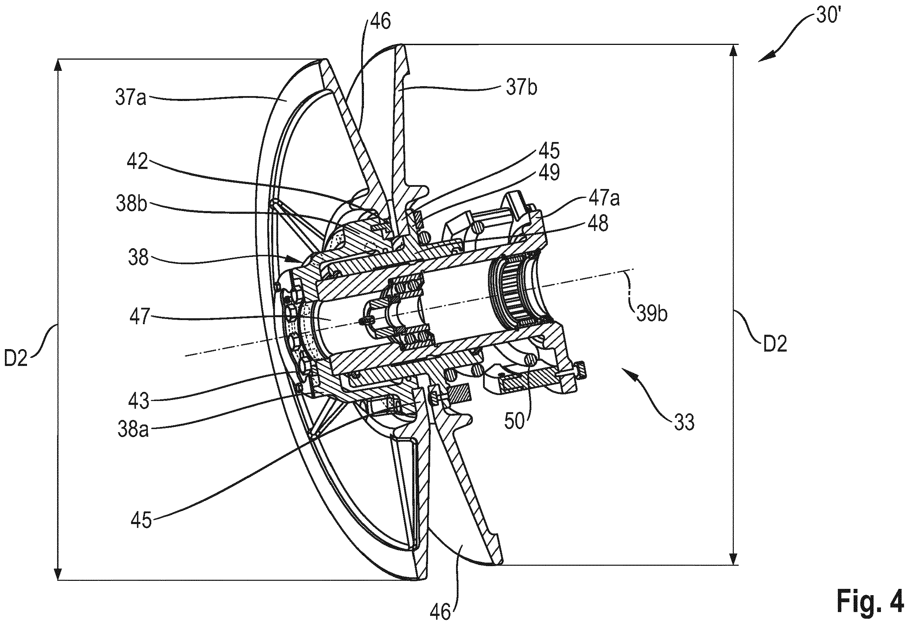

Fig. 4 zeigt eine Schnittansicht des Abtriebsscheibenpaketes 33 des zweiten Getriebemoduls 30' gemäß Fig. 2. Das Abtriebsscheibenpaket 33 des ersten Getriebemoduls 30 unterscheidet sich von dem in Fig. 4 dargestellten Abtriebsscheibenpaket 33 des zweiten Getriebemoduls 30' nur durch die Außendurchmesser D1 bzw. D2 der Regelscheiben 37a, 37b. Für Bauteile bzw. Komponenten, die mit denen des Antriebsscheibenpaketes 32 baugleich bzw. identisch sind, werden die gleichen Bezugszeichen verwendet. Das Abtriebsscheibenpaket 33 umfasst zwei mit den Regelscheiben 36a, 36b des Antriebsscheibenpaketes 32 baugleich ausgeführte Regelscheiben 37a, 37b. Baugleich im Sinne der Erfindung heißt, dass zumindest die geometrische Form der Regelscheiben 36a, 36b, 37a, 37b identisch ist. Insbesondere weist der jeweilige Ringbund 45 der Regelscheiben 36a, 36b, 37a, 37b identische Abmessungen auf. Die beiden Regelscheiben 37a, 37b weisen gleiche Außendurchmesser D2 auf. Weiterhin ist ein ebenfalls baugleicher bzw. identischer Übertragungsabschnitt 38 vorgesehen, der durch Schraubverbindungen 42 mit einer Hohlwelle 47 lösbar verbunden ist. Auf dem Übertragungsabschnitt 38 ist die Regelscheibe 37a ortsfest angeordnet. Die Befestigung der Regelscheibe 37a an dem Übertragungsabschnitt 38 erfolgt zwischen dem Ringbund 45 und dem zweiten Flanschabschnitt 38b mittels der Schraubverbindungen 42.

Auf der Hohlwelle 47 ist eine Nabe 48 drehfest angeordnet, die in axialer Richtung entlang der Rotationsachse 39b verschiebbar ist. Die Nabe 48 ist im Wesentlichen hohlzylindrisch ausgeführt und weist einen radialen Absatz 49 auf. Mit dem radialen Absatz 49 ist die Regelscheibe 37b mittels der Schraubverbindungen 42 lösbar verbunden. An einem Ende der Hohlwelle 47, das dem Übertragungsabschnitt 38 gegenüberliegt, befindet sich ein Federteller 47a, an dem ein hülsenförmiger Abschnitt 47b angeordnet ist, beispielsweise durch Verschrauben. Zwischen dem radialen Absatz 49 und dem Federteller 47a stützt sich eine koaxial zu der Hohlwelle 47 angeordnete Druckfeder 50 ab. Die Druckfeder 50 beaufschlagt die axial verschiebbare Nabe 48 mit einer in axialer Richtung wirkenden Federkraft, welche die beiden Regelscheiben 37a, 37b aufeinander zu bewegt. Der hülsenförmige Abschnitt 47b umschließt die Druckfeder 50 abschnittsweise in Umfangsrichtung. Das erste Getriebemodul 30 umfasst als Grundkomponenten die baugleichen Regelscheiben 36a, 36b; 37a, 37b des Antriebsscheibenpaketes 32 und des Abtriebsscheibenpaketes 33, die drehmomentübertragenden Bauteile Hohlwelle 40 bzw. 47, Nabe 41 bzw. 48 sowie die beiden baugleichen Übertragungsabschnitte 38.

In einer ersten Konfiguration des ersten Getriebemoduls 30 gemäß Fig. 2 sind die Außendurchmesser D1 der Regelscheiben 36a, 36b des Antriebsscheibenpaketes 32 und die Außendurchmesser D1 der Regelscheiben 37a, 37b des Abtriebsscheibenpaketes 33 gleich gewählt. Es sind vier baugleiche Regelscheiben 36a, 36b, 37a, 37b in dem ersten Getriebemodul 30 gemäß einer ersten Konfiguration verbaut.

Der von dem stufenlosen Getriebe 31 übertragbare Drehzahlbereich variiert bekanntermaßen mit dem Außendurchmesser D1, D2 der Regelscheiben 36a, 36b; 37a, 37b des Antriebsscheibenpaketes 32 und des Abtriebsscheibenpaketes 33. Zumindest ein weiteres Getriebemodul 30' gemäß der Fig. 2 mit einem von dem ersten Getriebemodul 30 abweichenden Drehzahlbereich lässt sich dadurch realisieren, dass die Regelscheiben 36a, 36b des Antriebsscheibenpaketes 32 und die Regelscheiben 37a, 37b des Abtriebsscheibenpaketes 33 jeweils den gleichen Außendurchmesser D2 aufweisen, wobei die Außendurchmesser D2 der Regelscheiben 36a, 36b, 37a, 37b des zweiten Getriebemoduls 30' kleiner als die Außendurchmesser D1 der Regelscheiben 36a, 36b, 37a, 37b des ersten Getriebemoduls 30 sind. Somit stehen zumindest zwei Getriebemodule 30, 30' zur Verfügung, die für unterschiedliche Getriebe 31, 31' innerhalb einer Baureihe für unterschiedliche Arbeitsorgane 22 oder baureihenübergreifend für eine Anzahl n unterschiedlicher Baureihen der landwirtschaftlichen Erntemaschine 1 verwendet werden können.

Eine Erweiterung der Kombinationsvielfalt ergibt sich daraus, dass aufgrund der Baugleichheit im Sinne einer einheitlichen geometrischen Form der Regelscheiben 36a, 36b, 37a, 37b und der identischen Ausführung der Ringbünde 45 der Regelscheiben 36a, 36b und der Regelscheiben 37a, 37b diese untereinander zwischen den beiden Getriebemodulen 30, 30' austauschbar sind. So kann das Antriebsscheibenpaket 32 gemäß Fig. 3 mit Regelscheiben 36a, 36b mit dem Außendurchmesser D1 und das Abtriebsscheibenpaket 33 gemäß Fig. 4 mit Regelscheiben 37a, 37b mit dem Außendurchmesser D2 ausgeführt sein, wobei der Außendurchmesser D1 größer als der Außendurchmesser D2 ist. Eine umgekehrte Ausgestaltung ist ebenfalls möglich, wenn die Regelscheiben 36a, 36b des Antriebsscheibenpaketes 32 den Außendurchmesser D2 und die Regelscheiben 36a, 36b des Abtriebsscheibenpaketes 33 den Außendurchmesser D1 aufweisen.

Somit sind durch eine Variation zumindest der Grundkomponenten Regelscheiben 36a, 36b; 37a, 37b, Übertragungsabschnitte 38, Naben 41, 48 und Hohlwellen 40, 47, von denen zumindest die Regelscheiben 36a, 36b; 37a, 37b und Übertragungsabschnitt 38 baugleich ausgeführt sind, zumindest zwei Getriebemodule 30, 30' ausbildbar, die verschiedene stufenlose Getriebe 31, 31' für ein eine Anzahl n unterschiedlicher Baureihen landwirtschaftlicher Erntemaschinen 1 abbilden, wobei zwei der Grundkomponenten zur Führung und Kraftübertragung, die Regelscheiben 36a, 36b; 37a, 37b und die Übertragungsabschnitte 38 im Wesentlichen baugleich oder baugleich ausgeführt sind. Dadurch wird erreicht, dass diese im Wesentlichen baugleichen Grundkomponenten sowohl auf der Antriebsseite und der Abtriebsseite des jeweiligen stufenlosen Getriebemoduls 30, 30' als auch innerhalb verschiedener Baureihen der Erntemaschinen 1 untereinander austauschbar sind.

**Bezugszeichenliste**

| | | | |
|---|---|---|---|
| 1 | Erntemaschine | 33 | Abtriebsscheibenpaket |
| 2 | Kabine | 34 | Keilriemen |
| 3 | Korntank | 35 | Verstellvorrichtung |
| 4 | Brennkraftmaschine | 36a | Regelscheibe |
| 5 | Erntevorsatz | 36b | Regelscheibe |
| 5a | Querförderschnecke | 37a | Regelscheibe |
| 6 | Haspel | 37b | Regelscheibe |
| 7 | Schrägförderer | 38 | Übertragungsabschnitt |
| 8 | Dresch- und Trenneinrichtung | 38a | Erster Flanschabschnitt |
| 9 | Vorbeschleunigungstrommel | 38b | Zweiter Flanschabschnitt |
| 9a | Abscheidekorb | 39a | Rotationsasche |
| 10 | Dreschtrommel | 39b | Rotationsasche |
| 10a | Abscheidekorb | 40 | Hohlwelle |
| 11 | Abscheidetrommel | 41 | Nabe |
| 11a | Abscheidekorb | 41a | Außenflanschabschnitt |
| 12 | Vorbereitungsboden | 42 | Schraubverbindung |
| 13 | Reinigungsvorrichtung | 43 | Schraubverbindung |
| 14 | Reinigungsgebläse | 44 | Schraubverbindung |
| 15 | Körnerschnecke | 45 | Ringbund |
| 16 | Abscheideeinrichtung | 46 | Radiale Abschnitt |
| 17 | Förderorgan | 47 | Hohlwelle |
| 18 | Abscheidegehäuse | 47a | Federteller |
| 19 | Rücklaufboden | 47b | Hülsenförmiger Abschnitt |
| 20 | Förderschnecke | 48 | Nabe |
| 21 | Strohhäcksler | 49 | Radialer Absatz |
| 22 | Arbeitsorgan | 50 | Druckfeder |
| | | D1 | Außendurchmesser |
| 30, 30' | Getriebemodul | D2 | Außendurchmesser |
| 31, 31' | Stufenloses Getriebe | | |
| 32 | Antriebsscheibenpaket | | |

## Patentansprüche

1. Baukastensystem, umfassend zumindest ein stufenloses Getriebe (31, 31') zum Antreiben zumindest eines Arbeitsorgans (22) einer Erntemaschine (1), wobei das zumindest eine stufenlose Getriebe (31, 31') folgende Grundkomponenten umfasst:
ein auf einer Antriebsseite angeordnetes Antriebsscheibenpaket (32) und ein auf einer Abtriebsseite angeordnetes Abtriebsscheibenpaket (33), die jeweils zwei konische Regelscheiben (36a, 36b; 37a, 37b) aufweisen,
- drehmomentübertragende Bauteile, auf denen das Antriebsscheibenpaket (32) und das Abtriebsscheibenpaket (33) angeordnet sind,
- wobei von dem Antriebsscheibenpaket (32) und dem Abtriebsscheibenpaket (33) jeweils zumindest eine Regelscheibe (36b, 37b) axial verschiebbar auf einer jeweiligen Antriebswelle (40, 47) der Antriebsseite und der Abtriebsseite angeordnet ist,
**dadurch gekennzeichnet, dass** die Regelscheiben (36a, 36b; 37a, 37b) eine einheitliche geometrische Form aufweisen und auf den drehmomentübertragenden Bauteilen lösbar befestigt sind, wobei das Baukastensystem durch eine Variation der Regelscheiben (36a, 36b) der Antriebsseite und/oder der Regelscheiben (37a, 37b) der Abtriebsseite verschiedene Drehzahlbereiche bereitstellen.

2. Baukastensystem nach Anspruch 1, **dadurch gekennzeichnet, dass** die Regelscheiben (36a, 36b; 37a, 37b) des Antriebsscheibenpaketes (32) und des Abtriebsscheibenpaketes (33) des zumindest einen als ein Getriebemodul (30, 30') ausgebildeten stufenlosen Getriebes (31, 31') jeweils gleiche Außendurchmesser (D1, D2) aufweisen.

3. Baukastensystem nach Anspruch 1, **dadurch gekennzeichnet, dass** die Regelscheiben (36a, 36b; 37a, 37b) des Antriebsscheibenpaketes (32) und des Abtriebsscheibenpaketes (33) des zumindest einen als ein Getriebemodul (30, 30') ausgebildeten stufenlosen Getriebes (31, 31') unterschiedliche Außendurchmesser (D1, D2) aufweisen.

4. Baukastensystem nach einem der vorangehenden Ansprüche, **dadurch gekennzeichnet, dass** durch die Regelscheiben (36a, 36b; 37a, 37b) zumindest zwei stufenlosen Getriebe (31, 31') unterschiedlicher Drehzahlbereiche darstellbar sind.

5. Baukastensystem nach einem der vorangehenden Ansprüche, **dadurch gekennzeichnet, dass** die Regelscheiben (36a, 36b; 37a, 37b) für eine Anzahl n unterschiedlicher Baureihen der landwirtschaftlichen Erntemaschine (1) einsetzbar sind.

6. Baukastensystem nach einem der vorangehenden Ansprüche, **dadurch gekennzeichnet, dass** die Regelscheiben (36a, 36b; 37a, 37b) als Gussteile ausgeführt sind.

7. Baukastensystem nach einem der vorangehenden Ansprüche, **dadurch gekennzeichnet, dass** die Regelscheiben (36a, 36b; 37a, 37b) mittels Schraubverbindungen (42) mit den drehmomentübertragenden Bauteilen lösbar verbunden sind.

8. Baukastensystem nach einem der vorangehenden Ansprüche, **dadurch gekennzeichnet, dass** die Regelscheiben (36a, 36b; 37a, 37b) jeweils einen Ringbund (45) aufweisen, durch den die jeweilige Regelscheibe (36a, 36b; 37a, 37b) mit einem korrespondierenden Flanschabschnitt (38b, 41a) der drehmomentübertragenden Bauteile verbindbar ist.

9. Baukastensystem nach einem der vorangehenden Ansprüche, **dadurch gekennzeichnet, dass** die drehmomentübertragenden Bauteile eine Nabe (41, 48) und ein hohlzylindrischer Übertragungsabschnitt (38) sind.

10. Baukastensystem nach einem der vorangehenden Ansprüche, **dadurch gekennzeichnet, dass** der hohlzylindrische Übertragungsabschnitt (38) auf der Antriebsseite und der Abtriebsseite baugleich ausgeführt ist.

11. Baukastensystem nach Anspruch 10, **dadurch gekennzeichnet, dass** durch eine Variation der Regelscheiben (36a, 36b; 37a, 37b) und der hohlzylindrische Übertragungsabschnitte (38) zumindest zwei Getriebemodule (30, 30') ausbildbar sind, die verschiedene stufenlose Getriebe (31, 31') für eine Anzahl n unterschiedlicher Baureihen landwirtschaftlicher Erntemaschinen (1) abbilden.

12. Baukastensystem nach Anspruch 11, **dadurch gekennzeichnet, dass** die Regelscheiben (36a, 36b, 37a, 37b) des Antriebsscheibenpaketes (32) und des Abtriebsscheibenpaketes (33) sowie die hohlzylindrischen Übertragungsabschnitte (38) zwischen den Getriebemodulen (30, 30') austauschbar sind.

13. Baukastensystem nach einem der vorangehenden Ansprüche, **dadurch gekennzeichnet, dass** zur axialen Verschiebung der zumindest einen Regelscheiben (36a, 37a) des jeweiligen Antriebsscheibenpaketes (32) und Abtriebsscheibenpaketes (33) eine hydraulisch betätigbare Verstellvorrichtung (35) vorgesehen ist.

14. Erntemaschine (1) mit zumindest einem Arbeitsorgan (22), das durch zumindest ein stufenloses Getriebe (31, 31') antreibbar ist, **dadurch gekennzeichnet, dass** das zumindest eine stufenlose Getriebe (31, 31') mittels eines Baukastensystems nach einem der Ansprüche 1 bis 13 ausgebildet ist.

15. Verfahren zur Herstellung zumindest eines stufenlosen Getriebes (31, 31') nach einem Baukastensystem, wobei mittels des Baukastensystem zumindest eine landwirtschaftliche Erntemaschine (1) mit zumindest einem stufenlosen Getriebe (31, 31') zum Antreiben zumindest eines Arbeitsorgans (22) der Erntemaschine (1) ausgestattet wird, wobei das zumindest eine stufenlose Getriebe (31, 31') folgende Grundkomponenten umfasst:
ein Antriebsscheibenpaket (32), das auf einer Antriebsseite angeordnet wird, und ein Abtriebsscheibenpaket (33), das auf einer Abtriebsseite angeordnet wird, wobei das Antriebsscheibenpaket (32) und das Abtriebsscheibenpaket (33) jeweils zwei konische Regelscheiben (36a, 36b, 37a, 37b) aufweisen,
- drehmomentübertragende Bauteile, auf denen das Antriebsscheibenpaket (32) und das Abtriebsscheibenpaket (32) angeordnet werden,
- wobei von dem Antriebsscheibenpaket (32) und dem Abtriebsscheibenpaket (33) jeweils zumindest eine Regelscheibe (36b, 37b) axial verschiebbar auf einer jeweiligen Antriebswelle (40, 47) angeordnet wird, **dadurch gekennzeichnet, dass** die Regelscheiben (36a, 36b; 37a, 37b) mit einer einheitlichen geometrischen Form hergestellt und auf den drehmomentübertragenden Bauteilen lösbar befestigt werden, wobei durch eine Variation der Regelscheiben (36a, 36b) der Antriebsseite und/oder der Regelscheiben (37a, 37b) der Abtriebsseite verschiedene Drehzahlbereiche bereitgestellt werden.
